(19) **Europäisches Patentamt / European Patent Office / Office européen des brevets**

(11) **EP 3 533 827 A1**

(12) # EUROPEAN PATENT APPLICATION
published in accordance with Art. 153(4) EPC

(43) Date of publication:
04.09.2019 Bulletin 2019/36

(21) Application number: 17864510.7

(22) Date of filing: 13.10.2017

(51) Int Cl.:
*C08L 21/00* (2006.01)  *B60C 1/00* (2006.01)
*C08C 1/04* (2006.01)  *C08K 3/36* (2006.01)
*C08L 7/00* (2006.01)  *C08L 71/02* (2006.01)

(86) International application number:
**PCT/JP2017/037197**

(87) International publication number:
**WO 2018/079312 (03.05.2018 Gazette 2018/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 26.10.2016  JP 2016209666

(71) Applicant: **Sumitomo Rubber Industries, Ltd. Kobe-shi, Hyogo 651-0072 (JP)**

(72) Inventors:
• **KASAI, Yuki**
  **Kobe-shi**
  **Hyogo 651-0072 (JP)**
• **YOKOYAMA, Yuka**
  **Kobe-shi**
  **Hyogo 651-0072 (JP)**

(74) Representative: **TBK**
  **Bavariaring 4-6**
  **80336 München (DE)**

(54) **RUBBER COMPOSITION FOR TIRE, AND PNEUMATIC TIRE**

(57)  The present invention aims to provide a rubber composition for tires that provides a balanced improvement of fuel economy, mechanical strength at high temperatures, abrasion resistance, and resistance to instant large cuts, as well as a pneumatic tire including the rubber composition. The present invention relates to a rubber composition for tires, containing silica, polyethylene glycol, and substantially no silane coupling agent.

**Description**

TECHNICAL FIELD

The present invention relates to a rubber composition for tires, and a pneumatic tire including the rubber composition.

BACKGROUND ART

The increased costs due to the rising fuel prices and the higher expenses associated with the introduction of environmental regulations in the transportation industry have created a need for highly fuel efficient tires even for heavy load vehicles such as trucks and buses. Further studies are indispensable to meet the recent growing demand for better fuel economy. In addition to fuel economy, it is desirable for rubber compositions for tires to have other properties such as mechanical strength at high temperatures, abrasion resistance, and resistance to instant large cuts.

Patent Literature 1 describes that a balanced improvement of fuel economy and abrasion resistance may be achieved by incorporating predetermined amounts of a solution-polymerized styrene butadiene rubber, carbon black, silica, and polyethylene glycol. However, this technique leaves room for improvement to achieve a balanced improvement of fuel economy, mechanical strength at high temperatures, abrasion resistance, and resistance to instant large cuts.

CITATION LIST

PATENT LITERATURE

Patent Literature 1: WO 2013/014999

SUMMARY OF INVENTION

TECHNICAL PROBLEM

The present invention aims to solve the problem and provide a rubber composition for tires that provides a balanced improvement of fuel economy, mechanical strength at high temperatures, abrasion resistance, and resistance to instant large cuts, as well as a pneumatic tire including the rubber composition.

SOLUTION TO PROBLEM

As a result of extensive studies, the present inventors have found that when silica is incorporated without any silane coupling agent, and further polyethylene glycol (PEG) is incorporated, the resulting rubber vulcanizate has more flexibility to improve the elongation and provides a balanced improvement of fuel economy, mechanical strength at high temperatures, abrasion resistance, and resistance to instant large cuts. This finding has led to the completion of the present invention.

Specifically, the present invention relates to a rubber composition for tires, containing: silica; polyethylene glycol; and substantially no silane coupling agent.

Preferably, the rubber composition for tires contains 2 to 40 parts by mass of the silica per 100 parts by mass of a rubber component in the rubber composition.

Preferably, the rubber composition for tires contains a highly purified modified natural rubber.

Preferably, the modified natural rubber has a phosphorus content of 500 ppm or lower.

Preferably, the modified natural rubber has a nitrogen content of 0.30% by mass or lower.

Another aspect of the present invention is directed to a pneumatic tire, including a tire component containing the rubber composition.

Preferably, the tire component is a cap tread.

Preferably, the pneumatic tire is a heavy load tire.

ADVANTAGEOUS EFFECTS OF INVENTION

The rubber composition for tires of the present invention, which contains silica, polyethylene glycol, and substantially no silane coupling agent, has improved elongation when vulcanized and provides a balanced improvement of fuel economy, mechanical strength at high temperatures, abrasion resistance, and resistance to instant large cuts. Thus, pneumatic tires excellent in the balance of these properties can be provided.

## DESCRIPTION OF EMBODIMENTS

The rubber composition for tires of the present invention contains silica, polyethylene glycol, and substantially no silane coupling agent.

According to the present invention, as described above, since silica is incorporated without any silane coupling agent, and further polyethylene glycol (PEG) is incorporated, the resulting rubber vulcanizate has more flexibility to improve the elongation and provides a balanced improvement of fuel economy, mechanical strength at high temperatures, abrasion resistance, and resistance to instant large cuts. This may be described as follows.

When silica is combined with a silane coupling agent, the silica chemically bonds to a rubber component via the silane coupling agent, as a result of which the rubber vulcanizate has reduced elongation, e.g. at break. Meanwhile, silica readily aggregates, which can cause a decrease in tire performance. This phenomenon is significant when silica is combined with no silane coupling agent. In the present invention, in contrast, the combined use of silica and PEG reduces aggregation of silica and improves the dispersibility thereof, even in the absence of any silane coupling agent. Thus, it is believed that the resulting rubber vulcanizate has more flexibility to improve the elongation and provides a balanced improvement of fuel economy, mechanical strength at high temperatures, abrasion resistance, and resistance to instant large cuts.

Non-limiting examples of the silica include dry silica (anhydrous silica) and wet silica (hydrous silica). These may be used alone or in combinations of two or more. Preferred among these is wet silica because it has a large number of silanol groups.

The silica preferably has a nitrogen adsorption specific surface area ($N_2SA$) of 50 $m^2$/g or more, more preferably 80 $m^2$/g or more, still more preferably 150 $m^2$/g or more. If the $N_2SA$ is less than 50 $m^2$/g, mechanical strength at high temperatures, abrasion resistance, or resistance to instant large cuts tends to decrease. The $N_2SA$ is preferably 280 $m^2$/g or less, more preferably 240 $m^2$/g or less, still more preferably 200 $m^2$/g or less. Silica having a $N_2SA$ of more than 280 $m^2$/g tends to be difficult to disperse, thereby resulting in a deterioration in fuel economy, mechanical strength at high temperatures, abrasion resistance, or resistance to instant large cuts.

The $N_2SA$ of the silica is determined by the BET method in accordance with ASTM D3037-93.

In the present invention, the silica is preferably used in a predetermined amount to more suitably achieve the effects of the present invention.

Concretely, the amount of the silica per 100 parts by mass of the rubber component is preferably 2 to 40 parts by mass, more preferably 4 to 30 parts by mass. The upper limit of the amount is still more preferably 20 parts by mass, particularly preferably 15 parts by mass, most preferably 10 parts by mass. If the amount is less than 2 parts by mass, the rubber vulcanizate may fail to have sufficient flexibility and sufficiently improved elongation and to provide a balanced improvement of fuel economy, mechanical strength at high temperatures, abrasion resistance, and resistance to instant large cuts. If the amount is more than 40 parts by mass, mechanical strength at high temperatures, abrasion resistance, or resistance to instant large cuts may decrease.

Particularly when the amount of the silica is 4 to 10 parts by mass, the effects of the present invention can be more suitably achieved.

The polyethylene glycol is not particularly limited, and may suitably be a compound represented by the following formula :

$$HO(CH_2CH_2O)_pH$$

wherein p denotes an integer of 5 to 100.

In order to more suitably achieve the effects of the present invention, the integer p is preferably 80 to 100.

The polyethylene glycol preferably has a weight average molecular weight of 1000 or more, more preferably 3000 or more, but preferably 10000 or less, more preferably 5000 or less. When the weight average molecular weight is within the range indicated above, the effects of the present invention can be more suitably achieved.

Herein, the weight average molecular weight (Mw) of the polyethylene glycol may be measured by gel filtration chromatography under the following conditions including an apparatus of LC-6A (available from Shimadzu Corporation), a detector of RID-10A (available from Shimadzu Corporation), a column of Asahipak GF-510HQ (7.6 mm (diameter) $\times$ 0.3m (length) ; available from Showa Denko K.K.), a mobile phase of water, a flow rate of 1 mL/min, and a temperature of 30°C.

The amount of the polyethylene glycol per 100 parts by mass of the rubber component is preferably 0.1 parts by mass or more, more preferably 0.2 parts by mass or more, still more preferably 0.3 parts by mass or more. If the amount is less than 0.1 parts by mass, the effects of the present invention may not be achieved well. The amount is preferably 3.5 parts by mass or less, more preferably 2.5 parts by mass or less, still more preferably 1.5 parts by mass or less, particularly preferably 1.0 part by mass or less. If the amount is more than 3.5 parts by mass, processability may deteriorate.

The rubber composition of the present invention contains substantially no silane coupling agent.

As used herein, the term "substantially no silane coupling agent" means that the amount of silane coupling agents per 100 parts by mass of the rubber component is preferably 0.1 parts by mass or less, more preferably 0.01 parts by mass or less, still more preferably 0 parts by mass.

Examples of silane coupling agents include any silane coupling agent conventionally used in combination with silica in the rubber industry. Specific examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(4-trimethoxysilylbutyl)tetrasulfide, bis(3-triethoxysilylpropyl)trisulfide, bis(2-triethoxysilylethyl)trisulfide, bis(4-triethoxysilylbutyl)trisulfide, bis(3-trimethoxysilylpropyl)trisulfide, bis(2-trimethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 2-trimethoxysilylethyl-N,N-dimethylthiocarbamoyl tetrasulfide, 3-trimethoxysilylpropylbenzothiazolyl tetrasulfide, 3-triethoxysilylpropylbenzothiazole tetrasulfide, 3-triethoxysilylpropyl methacrylate monosulfide, and 3-trimethoxysilylpropyl methacrylate monosulfide; mercapto silane coupling agents such as 3-mercaptopropyltrimethoxysilane, 3-mercaptopropyltriethoxysilane, 2-mercaptoethyltrimethoxysilane, and 2-mercaptoethyltriethoxysilane; vinyl silane coupling agents such as vinyltriethoxysilane and vinyltrimethoxysilane; amino silane coupling agents such as 3-aminopropyltriethoxysilane, 3-aminopropyltrimethoxysilane, 3-(2-aminoethyl)aminopropyltriethoxysilane, and 3-(2-aminoethyl)aminopropyltrimethoxysilane; glycidoxy silane coupling agents such as γ-glycidoxypropyltriethoxysilane, γ-glycidoxypropyltrimethoxysilane, γ-glycidoxypropylmethyldiethoxysilane, and γ-glycidoxypropylmethyldimethoxysilane; nitro silane coupling agents such as 3-nitropropyltrimethoxysilane and 3-nitropropyltriethoxysilane; and chloro silane coupling agents such as 3-chloropropyltrimethoxysilane, 3-chloropropyltriethoxysilane, 2-chloroethyltrimethoxysilane, and 2-chloroethyltriethoxysilane.

Examples of materials that can be used as the rubber component in the present invention include diene rubbers such as isoprene-based rubbers, polybutadiene rubber (BR), styrene butadiene rubber (SBR), styrene isoprene butadiene rubber (SIBR), ethylene propylene diene rubber (EPDM), chloroprene rubber (CR), acrylonitrile butadiene rubber (NBR), and butyl rubber (IIR). The rubber component may be a single material or a combination of two or more materials. Among these, isoprene-based rubbers and/or BR are preferred, with combinations of isoprene-based rubbers with BR being more preferred.

Examples of the isoprene-based rubbers include natural rubber (NR) and polyisoprene rubber (IR), as well as a modified natural rubber (ultra pure natural rubber (UPNR)) which has been highly purified by removing impurities from NR. Among these, the modified natural rubber (ultra pure natural rubber (UPNR)) is preferred.

When a rubber composition containing silica without any silane coupling agent contains a combination of the modified natural rubber (ultra pure natural rubber (UPNR)) and polyethylene glycol, it provides synergistically improved elongation when vulcanized, fuel economy, mechanical strength at high temperatures, abrasion resistance, and resistance to instant large cuts. This is probably because in the modified natural rubber (ultra pure natural rubber (UPNR)) from which non-rubber components have been removed, the polyisoprene components of natural rubber have a good affinity for polyethylene glycol, and further a higher proportion of the polyisoprene components of natural rubber can directly contact polyethylene glycol, as a result of which the incorporation of polyethylene glycol into a rubber composition containing silica without any silane coupling agent provides more significant effects.

Moreover, the modified natural rubber, which has been highly purified by removing non-rubber components such as proteins and phospholipids, is well compatible with fillers such as silica and the resulting rubber vulcanizate has further improved elongation. Thus, the effects of the present invention can be more suitably achieved.

The modified natural rubber may be any natural rubber that has been highly purified by removing non-rubber components such as proteins and phospholipids. In particular, it is preferably a highly purified natural rubber that is adjusted to a pH of 2 to 7. The modified natural rubber may be a single material or a combination of two or more materials. As used herein, the expression "removing non-rubber components" means that at least some, but not necessarily all, non-rubber components are removed.

When the modified natural rubber which has been highly purified by removing non-rubber components such as proteins and phospholipids is further controlled to have an appropriate pH, the resulting rubber vulcanizate has further improved elongation and provides further improvement in fuel economy, mechanical strength at high temperatures, abrasion resistance, and resistance to instant large cuts. Moreover, removing non-rubber components or making the rubber basic or highly acidic can accelerate degradation of the rubber; however, the rubber adjusted to a pH within the predetermined range exhibits a reduced decrease in molecular weight during storage, thereby resulting in good heat aging resistance. Consequently, it is possible to prevent reduction in rubber physical properties during the kneading process and to improve filler dispersion, thereby improving the balance of the above-mentioned properties.

The term "highly purified" means that impurities other than natural polyisoprenoid components, such as phospholipids and proteins are removed. The structure of natural rubber is such that an isoprenoid component is covered with these impurity components. By removing the impurity components, it is considered that the structure of the isoprenoid component is altered such that the interactions with compounding agents are changed to reduce energy loss, and durability is improved, as a result of which a better quality rubber composition can be prepared.

The highly purified modified natural rubber having a pH adjusted to 2 to 7 may be any modified natural rubber which has been highly purified by reducing the non-rubber component content and which has a pH of 2 to 7. Specific examples include: (1) a modified natural rubber which is obtained by removing non-rubber components from natural rubber followed by treatment with an acidic compound, and which has a pH of 2 to 7; (2) a modified natural rubber which is obtained by washing a saponified natural rubber latex followed by treatment with an acidic compound, and which has a pH of 2 to 7; (3) a modified natural rubber which is obtained by washing a deproteinized natural rubber latex followed by treatment with an acidic compound, and which has a pH of 2 to 7; and (4) a modified natural rubber which is obtained by coagulating (solidifying) natural rubber latex, crashing the coagulated (solidified) rubber, and repeatedly washing it with water, and which has a pH of 2 to 7.

As described above, the modified natural rubber may be prepared, for example, by washing a saponified natural rubber latex or deproteinized natural rubber latex with water such as distilled water, followed by treatment with an acidic compound. However, it is essential for the treatment with an acidic compound to shift and reduce the pH to the acidic side relative to the pH of distilled water used in the water washing step. Distilled water usually does not have a pH of 7.00 but has a pH of approximately 5 to 6. When distilled water with such a pH value is used, it is essential to reduce the pH to a pH value more acidic than pH 5-6 by the treatment with an acidic compound. Specifically, the treatment with an acidic compound is preferably performed to reduce the pH to a value lower by 0.2 to 2 than the pH of water used in the water washing step.

The modified natural rubber preferably has a pH of 2 to 7, more preferably 3 to 6, still more preferably 4 to 6. When the pH is adjusted within the range indicated above, a decrease in heat aging resistance can be prevented and the above-mentioned properties can be significantly improved. The pH of the modified natural rubber is determined by cutting the rubber into pieces at most 2 mm square on each side, immersing the pieces in distilled water, irradiating the immersed pieces with microwaves for extraction at 90°C for 15 minutes, and measuring the resulting immersion water with a pH meter. Specifically, it is determined as described later in EXAMPLES. Regarding the extraction, one-hour extraction, e.g. using an ultrasonic washing device cannot completely extract water-soluble components from the inside of the rubber and thus cannot reveal the pH of the inside accurately. In contrast, the present inventors have found that extraction by the above-described technique can elucidate the real nature of rubber.

The modified natural rubber may be highly purified by various methods, including the methods (1) to (4). For example, the modified natural rubber preferably has a phosphorus content of 500 ppm or lower, more preferably 400 ppm or lower, still more preferably 300 ppm or lower, particularly preferably 200 ppm or lower, most preferably 150 ppm or lower. If the phosphorus content is higher than 500 ppm, the Mooney viscosity may increase during storage, thereby deteriorating processability, and the tan $\delta$ may increase, resulting in failure to improve fuel economy. The phosphorus content may be measured by conventional methods, such as ICP emission analysis. The phosphorus is presumably derived from phospholipids in natural rubber.

In the case of the modified natural rubber containing an artificial antioxidant, it preferably has a nitrogen content of 0.30% by mass or lower, more preferably 0.15% by mass or lower, still more preferably 0.10% by mass or lower after immersed in acetone at room temperature (25°C) for 48 hours. If the nitrogen content is higher than 0.30% by mass, the Mooney viscosity may increase during storage, thereby deteriorating processability, and the effect of improving fuel economy may be insufficient. Highly purified natural rubber, which is free of natural antioxidant components that natural rubber is thought to contain by nature, may deteriorate during long-term storage. To address this problem, artificial antioxidants may be added in some cases. The nitrogen content is measured after the artificial antioxidants in the rubber are removed by extraction with acetone. The nitrogen content may be measured by conventional methods, such as the Kjeldahl method or using a trace nitrogen analyzer. The nitrogen is derived from proteins and amino acids.

The highly purified modified natural rubber having a pH adjusted to 2 to 7, such as the rubber (1) to (4), may be prepared by, for example, the following production method 1 or 2: the method 1 including step 1-1 of saponifying natural rubber latex, step 1-2 of washing the saponified natural rubber latex, and step 1-3 of treating the latex with an acidic compound; or the method 2 including step 2-1 of deproteinizing natural rubber latex, step 2-2 of washing the deproteinized natural rubber latex, and step 2-3 of treating the latex with an acidic compound.

The modified natural rubber may be prepared as described in JP 2010-138359 A or JP 2015-124308 A, for example.

The amount of isoprene-based rubber (preferably the modified natural rubber) based on 100% by mass of the rubber component is preferably 40% by mass or more, more preferably 60% by mass or more, still more preferably 70% by mass or more, but is preferably 90% by mass or less, more preferably 85% by mass or less. When the amount of isoprene-based rubber (preferably the modified natural rubber) is within the range indicated above, the effects of the present invention can be more suitably achieved.

Any BR may be used including those generally used in the tire industry. Examples include high-cis 1,4-polybutadiene rubber (high-cis BR), polybutadiene rubber containing 1,2-syndiotactic polybutadiene crystals (SPB-containing BR), modified polybutadiene rubber (modified BR), and BR synthesized using rare earth catalysts (rare earth-catalyzed BR).

To more suitably achieve the effects of the present invention, the BR preferably has a cis content of 70% by mass or higher, more preferably 90% by mass or higher, still more preferably 95% by mass or higher.

To more suitably achieve the effects of the present invention, the BR preferably has a vinyl content of 2.0% by mass or lower, more preferably 1.5% by mass or lower, still more preferably 1.0% by mass or lower.

The cis content and vinyl content of BR may be measured by infrared absorption spectrometry.

The amount of BR based on 100% by mass of the rubber component is preferably 10% by mass or more, more preferably 15% by mass or more, but is preferably 60% by mass or less, more preferably 40% by mass or less, still more preferably 30% by mass or less. When the amount of BR is within the range indicated above, the effects of the present invention can be more suitably achieved.

The combined amount of isoprene-based rubber and BR based on 100% by mass of the rubber component is preferably 60% by mass or more, more preferably 80% by mass or more, and may be 100% by mass.

The rubber composition of the present invention preferably contains a fine particle carbon black having a nitrogen adsorption specific surface area of 120 $m^2$/g or more. In this case, the effects of the present invention can be more suitably achieved.

The fine particle carbon black preferably has a nitrogen adsorption specific surface area ($N_2SA$) of 120 $m^2$/g or more, more preferably 140 $m^2$/g or more, still more preferably 160 $m^2$/g or more. A $N_2SA$ of less than 120 $m^2$/g tends to lead to an insufficient reinforcing effect, thereby resulting in insufficient mechanical strength at high temperatures, abrasion resistance, and resistance to instant large cuts. The upper limit of the $N_2SA$ is not particularly critical but is preferably 300 $m^2$/g or less, more preferably 200 $m^2$/g or less. If the $N_2SA$ is more than 300 $m^2$/g, fuel economy tends to decrease.

The nitrogen adsorption specific surface area of the carbon black may be measured in accordance with the method A in JIS K6217.

The fine particle carbon black preferably has a dibutyl phthalate (DBP) oil absorption of 90 $cm^3$/100 g or more, more preferably 100 $cm^3$/100 g or more, still more preferably 110 $cm^3$/100 g or more. The upper limit of the DBP oil absorption is not particularly critical but is preferably 300 $cm^3$/100 g or less, more preferably 200 $cm^3$/100 g or less. When the DBP oil absorption is within the range indicated above, the balance of fuel economy, mechanical strength at high temperatures, abrasion resistance, and resistance to instant large cuts can be significantly improved.

The DBP oil absorption of the carbon black is measured in accordance with JIS K6217-4:2001.

The ratio of the cetyltrimethylammonium bromide adsorption specific surface area (CTAB) to the iodine adsorption (IA) (CTAB/IA) of the fine particle carbon black is preferably 0.70 or higher, more preferably 0.80 or higher, still more preferably 0.85 or higher. The upper limit of the ratio is not particularly critical but is preferably 1.00 or lower, more preferably 0.95 or lower. When the ratio is within the range indicated above, the balance of fuel economy, mechanical strength at high temperatures, abrasion resistance, and resistance to instant large cuts can be significantly improved.

The CTAB and IA of the carbon black may be measured in accordance with JIS K6217-3:2001 and JIS K6217-1:2001, respectively.

The amount of the fine particle carbon black per 100 parts by mass of the rubber component is preferably 5 parts by mass or more, more preferably 10 parts by mass or more, still more preferably 20 parts by mass or more, but is preferably 100 parts by mass or less, more preferably 70 parts by mass or less, still more preferably 50 parts by mass or less, particularly preferably 35 parts by mass or less. When the amount is within the range indicated above, the balance of fuel economy, mechanical strength at high temperatures, abrasion resistance, and resistance to instant large cuts can be significantly improved.

The rubber composition of the present invention may contain an additional carbon black which is different from the fine particle carbon black. The additional carbon black is not particularly limited, but is preferably a carbon black having a $N_2SA$ of at least 50 $m^2$/g but less than 120 $m^2$/g, more preferably of at least 90 $m^2$/g but less than 120 $m^2$/g. When the fine particle carbon black is combined with the carbon black with the above-indicated $N_2SA$, the effects of the present invention can be more suitably achieved.

The combined amount of the fine particle carbon black and additional carbon black (total carbon black content) per 100 parts by mass of the rubber component is preferably 5 parts by mass or more, more preferably 10 parts by mass or more, still more preferably 30 parts by mass or more, but is preferably 150 parts by mass or less, more preferably 100 parts by mass or less, still more preferably 60 parts by mass or less. When the combined amount is within the range indicated above, the effects of the present invention can be more suitably achieved.

The combined amount of carbon black (total carbon black) and silica per 100 parts by mass of the rubber component is preferably 5 parts by mass or more, more preferably 10 parts by mass or more, still more preferably 30 parts by mass or more, but is preferably 150 parts by mass or less, more preferably 100 parts by mass or less, still more preferably 70 parts by mass or less. When the combined amount is within the range indicated above, the effects of the present invention can be more suitably achieved.

The rubber composition of the present invention may appropriately contain, in addition to the above-mentioned ingredients, other compounding agents generally used in the preparation of rubber compositions, such as zinc oxide, stearic acid, various antioxidants, plasticizers (e.g. oils and waxes), tackifiers, vulcanizing agents (e.g. sulfur and organic peroxides), and vulcanization accelerators.

The rubber composition of the present invention may be prepared by known methods, such as kneading the ingredients using a rubber kneading machine such as an open roll mill or Banbury mixer and then vulcanizing the kneaded mixture.

The rubber composition of the present invention is suitable for use in various tire components, particularly in cap treads of tires.

The pneumatic tire of the present invention may be produced using the rubber composition by usual methods.

Specifically, the unvulcanized rubber composition containing the ingredients may be extruded into the shape of a tire component such as a cap tread and assembled with other tire components on a tire building machine in a usual manner to build an unvulcanized tire, which may then be heated and pressed in a vulcanizer to produce a tire.

The pneumatic tire of the present invention may be used as, for example, a tire for passenger vehicles, a heavy load tire, a tire for two-wheeled vehicles, or a high performance tire. Among these, it is suitable as a heavy load tire. The term "heavy load tire" as used herein refers to a tire for heavy weight vehicles such as trucks and buses.

EXAMPLES

The present invention will be specifically described with reference to, but not limited to, examples below.

The chemicals used in production examples are listed below.

Field latex: field latex available from Muhibbah Lateks

EMAL E-27C (surfactant): EMAL E-27C (sodium polyoxyethylene lauryl ether sulfate, active ingredient: 27% by mass) available from Kao Corporation

NaOH: NaOH available from Wako Pure Chemical Industries, Ltd.

Wingstay L (antioxidant): Wingstay L (butylated condensate of p-cresol and dicyclopentadiene) available from Eliokem

Emulvin W (surfactant): Emulvin W (aromatic polyglycol ether) available from Lanxess

Tamol NN 9104 (surfactant): Tamol NN 9104 (sodium salt of naphthalenesulfonic acid/formaldehyde) available from BASF

Van gel B (surfactant): Van gel B (hydrated magnesium aluminum silicate) available from Vanderbilt

(Preparation of antioxidant dispersion)

An amount of 462.5 g of water was mixed with 12.5 g of Emulvin W, 12.5 g of Tamol NN 9104, 12.5 g of Van gel B, and 500 g of Wingstay L (total amount of mixture: 1000 g) for 16 hours using a ball mill to prepare an antioxidant dispersion.

(Production Example 1)

The solids concentration (DRC) of the field latex was adjusted to 30% (w/v) . Then, 1000 g of the latex was combined with 25 g of a 10% aqueous solution of EMAL E-27C and 60 g of a 25% NaOH aqueous solution, and the mixture was subjected to a saponification reaction for 24 hours at room temperature to prepare a saponified natural rubber latex. Next, 6 g of the antioxidant dispersion was added and the mixture was stirred for 2 hours, and then water was further added to dilute the mixture until the rubber concentration reached 15% (w/v). Thereafter, formic acid was added with slow stirring to adjust the pH to 4.0. Subsequently, a cationic polymer flocculant was added and the mixture was stirred for 2 minutes to cause coagulation. The obtained coagulum (coagulated rubber) had a diameter of approximately 0.5 to 5 mm. The coagulum was taken out and immersed in 1000 mL of a 2% by mass aqueous solution of sodium carbonate for 4 hours at room temperature, and then the rubber was taken out. The rubber was combined with 2000 mL of water and the mixture was stirred for 2 minutes and then dehydrated as much as possible. This cycle of operation was repeated seven times. Thereafter, 500 mL of water was added, and 2% by mass formic acid was added until the pH reached 4, followed by leaving the mixture for 15 minutes. Then, the mixture was dehydrated as much as possible and combined with water again, followed by stirring for 2 minutes. This cycle of operation was repeated three times . Then, water was squeezed off from the resultant rubber using water squeezing rolls to form the rubber into a sheet, followed by drying for 4 hours at 90°C to obtain a solid rubber (modified natural rubber A) .

(Production Example 2)

The field latex was diluted with water to a DRC of 15% (w/v) . Then, formic acid was added with slow stirring to adjust the pH to 4.0 to 4.5 to cause coagulation. The coagulated rubber was crashed and repeatedly washed with 1000 mL of water. The resultant rubber was dried at 110°C for 120 minutes to obtain a solid rubber (modified natural rubber B).
The solid rubbers prepared as above were evaluated as follows. Table 1 shows the results.

<Measurement of pH of rubber>

The rubber in an amount of 5 g was cut into pieces whose sum of the three dimensions was 5 mm or less (about 1-2 mm × about 1-2 mm × about 1-2 mm). The pieces were placed in a 100 mL beaker and combined with 50 mL of distilled water at room temperature, and they were heated to 90°C over 2 minutes, followed by irradiation with microwaves (300 W) for 13 minutes (total 15 minutes) while adjusting and maintaining the temperature at 90°C. Then, after the resulting immersion water was cooled to 25°C using an ice bath, the pH of the immersion water was measured with a pH meter.

<Measurement of nitrogen content>

(Acetone extraction (preparation of specimen))

Each solid rubber was finely cut into pieces 1mm square, and an about 0.5 g sample of the pieces was weighed out. The sample was immersed in 50 g of acetone at room temperature (25°C) for 48 hours. Then, the rubber was taken out and dried. Thus, specimens (from which antioxidants had been extracted) were prepared.

(Measurement)

The nitrogen content of the specimens was measured by the following method.
The acetone-extracted specimens prepared as above were decomposed and gasified using a trace nitrogen/carbon analyzer "SUMIGRAPH NC 95A (Sumika Chemical Analysis Service, Ltd.)", and the gas generated was analyzed using a gas chromatograph "GC-8A (Shimadzu Corporation)" to determine the nitrogen content.
<Measurement of phosphorus content>
The phosphorus content was measured using an ICP emission spectrometer (P-4010, Hitachi, Ltd.).

<Measurement of gel content>

The raw rubber was cut into 1 mm × 1 mm pieces, and an about 70 mg sample of the pieces was accurately weighed out. To the sample was added 35 mL of toluene, and the mixture was left in a cool, dark place for one week. Then, the mixture was centrifuged so that a gel fraction insoluble in toluene was precipitated, and a toluene-soluble supernatant was removed. Only the gel fraction was solidified with methanol and then dried. The mass of the dried gel fraction was measured. The gel content (% by mass) was determined by the following equation:

```
Gel content (% by mass) = (mass (mg) after drying)/(initial mass
(mg) of sample) × 100.
```

<Heat aging resistance>

The weight average molecular weight of the solid rubbers was measured before and after aging to determine the molecular weight retention ratio using the equation below to evaluate the heat aging resistance. The aging process was carried out by finely cutting each rubber into pieces 2-5 mm square, and placing the pieces in an oven at 80°C for 72 hours. The weight average molecular weight was measured by gel permeation chromatography using isoprene standards. A higher value indicates better heat aging resistance.

```
(Heat aging resistance) = (molecular weight after
aging)/(molecular weight before aging) × 100 (%)
```

[Table 1]

| | Production Example | |
|---|---|---|
| | 1 | 2 |
| pH | 5.0 | 4.0 |
| Nitrogen content (% by mass) | 0.07 | |
| Phosphorus content (ppm) | 92 | 430 |
| Gel content (% by mass) | 6 | |
| Heat aging resistance (%) | 95 | |

As shown in Table 1, the modified natural rubber with a pH in the range of 2 to 7 exhibited excellent heat aging resistance.

The chemicals used in examples and comparative examples are listed below.

NR: TSR (phosphorus content: 572 ppm)
Modified natural rubber A: the modified natural rubber prepared in Production Example 1
Modified natural rubber B: the modified natural rubber prepared in Production Example 2
BR: BR730 (rare earth-catalyzed BR synthesized using a Nd catalyst, cis content: 97% by mass, vinyl content: 0.9% by mass) available from JSR Corporation
Fine particle carbon black: DIABLACK (SAF, $N_2SA$: 168 $m^2$/g, DBP oil absorption: 112 $cm^3$/100 g, CTAB/IA: 0.89) available from Mitsubishi Chemical Corporation
Carbon black: Seast N220 ($N_2SA$: 114 $m^2$/g) available from Mitsubishi Chemical Corporation
Silica: Ultrasil VN3 ($N_2SA$: 175 $m^2$/g) available from Evonik Degussa
Silane coupling agent: Si266 (bis(3-triethoxysilylpropyl)disulfide) available from Evonik Degussa
Resin: YS POLYSTER M125 (terpene-based resin, hydrogenated aromatic modified terpene, softening point: 125°C) available from Yasuhara Chemical Co., Ltd.
PEG: PEG#4000 (polyethylene glycol, weight average molecular weight: 4000, $HO(CH_2CH_2O)_pH$ wherein p is about 90) available from NOF Corporation
Zinc oxide: zinc oxide #2 available from Mitsui Mining and Smelting Co., Ltd.
Stearic acid: stearic acid beads "Tsubaki" available from NOF Corporation
Sulfur: Seimi Sulfur (oil content: 10%) available from Nippon Kanryu Industry Co., Ltd.
Vulcanization accelerator: NOCCELER NS (N-t-butyl-2-benzothiazolesulfenamide) available from Ouchi Shinko Chemical Industrial Co., Ltd.

According to each of the formulations shown in Table 2, the chemicals other than the sulfur and vulcanization accelerator were kneaded using a 1.7 L Banbury mixer until the temperature of the mixture reached 180°C. To the kneaded mixture were added the sulfur and vulcanization accelerator and they were kneaded using an open roll mill until the temperature of the mixture reached 105°C to obtain an unvulcanized rubber composition. Then, the unvulcanized rubber composition was press-vulcanized at 160°C for 15 minutes to obtain a vulcanized rubber composition.

The vulcanized rubber compositions prepared as above were evaluated as described below. Table 2 shows the results.

(Fuel economy)

Specimens for analysis were cut out from the rubber slabs (2 mm x 130 mm × 130 mm) of the vulcanized rubber compositions. The tan δ of the specimens for analysis was determined with a viscoelastic spectrometer VES (available from Iwamoto Seisakusho Co., Ltd.) at a temperature of 50°C, an initial strain of 10%, a dynamic strain of 2%, and a frequency of 10 Hz. The measurements of the formulation examples are expressed as an index (fuel economy index) using the equation below, with Comparative Example 1 set equal to 100. A higher fuel economy index indicates a smaller tan δ value and thus better fuel economy.

$$\text{(Fuel economy index)} = \text{(tan δ of Comparative Example 1)}/\text{(tan δ of each formulation example)} \times 100$$

(M300)

No. 6 dumbbell-shaped specimens were prepared from the vulcanized rubber compositions in accordance with JIS K6251:2010. The specimens were subjected to tensile testing in a 100°C environment to measure the stress at 300% elongation (M300, MPa). The results are expressed as an index, with Comparative Example 1 set equal to 100. A higher index indicates a smaller M300 value, meaning that the rubber vulcanizate has better elongation.

(High-temperature fracture energy)

The tensile strength and elongation at break of the rubber slabs (2 mm × 130 mm × 130 mm) of the vulcanized rubber compositions were measured at 130°C in accordance with JIS K6251 "Rubber, vulcanized or thermoplastic - Determination of tensile stress-strain properties". The measurements were used to calculate a high-temperature fracture energy defined as (tensile strength) × (elongation at break)/2. The results of the formulation examples are expressed as an index (high-temperature fracture energy index) using the equation below, with Comparative Example 1 set equal to 100. A higher high-temperature fracture energy index indicates better mechanical strength at high temperatures.

$$\text{(High-temperature fracture energy index)} = \text{(High-temperature fracture energy of each formulation example)}/\text{(High-temperature fracture energy of Comparative Example 1)} \times 100$$

(Abrasion resistance)

The Lambourn abrasion loss of the rubber slabs of the vulcanized rubber compositions was determined using a Lambourn abrasion tester at a temperature of 20°C, a slip ratio of 20%, and a test time of two minutes. The Lambourn abrasion loss was used to calculate a volume loss. The volume losses of the formulation examples are expressed as an index (Lambourn abrasion index) using the equation below, with Comparative Example 1 set equal to 100. A higher Lambourn abrasion index indicates better abrasion resistance.

$$\text{(Lambourn abrasion index)} = \text{(Volume loss of Comparative Example 1)}/\text{(Volume loss of each formulation example)} \times 100$$

(Resistance to instant large cuts (high speed tensile testing))

The vulcanized rubber compositions were punched out into 2 mm-thick rubber samples using a No. 3 dumbbell die and then subjected to tensile testing at a tensile rate of 14 m/s to measure the elongation at break (EB). The EB values are expressed as an index, with Comparative Example 1 set equal to 100. A higher index indicates better resistance to instant large cuts.

As used herein, the term "resistance to instant large cuts" is different from the term "cut resistance" which refers to the ability to inhibit cuts (cracks) shorter than a half of the tread block from being made by a single contact, but refers to the ability to inhibit large cuts (cracks) across the tread surface from being made by a single contact.

[Table 2]

| | | Example | | | | | Comparative Example | | | |
|---|---|---|---|---|---|---|---|---|---|---|
| | | 1 | 2 | 3 | 4 | 5 | 1 | 2 | 3 | 4 |
| Amount (parts by mass) | NR | – | – | – | 70 | – | 70 | – | – | 70 |
| | Modified natural rubber A | 70 | 70 | 70 | – | – | – | 70 | 70 | – |
| | Modified natural rubber B | – | – | – | – | 70 | – | – | – | – |
| | BR | 30 | 30 | 30 | 30 | 30 | 30 | 30 | 30 | 30 |
| | Fine particle carbon black | 24 | 20 | 20 | 20 | 20 | 20 | 20 | 20 | 20 |
| | Carbon black | 19 | 20 | 23 | 20 | 20 | 30 | 20 | 20 | 20 |
| | Silica | 8 | 10 | 6 | 10 | 10 | – | 10 | 10 | 10 |
| | Silane coupling agent | – | – | – | – | – | – | 1 | – | – |
| | Resin | 2 | – | 3 | – | – | – | – | – | – |
| | PEG | 0.5 | 0.4 | 0.6 | 0.4 | 0.4 | – | 0.4 | – | – |
| | Zinc oxide | 2.85 | 2.85 | 2.85 | 2.85 | 2.85 | 2.85 | 2.85 | 2.85 | 2.85 |
| | Stearic acid | 2.5 | 2.5 | 2.5 | 2.5 | 2.5 | 2.5 | 2.5 | 2.5 | 2.5 |
| | Sulfur | 1.4 | 1.4 | 1.4 | 1.4 | 1.4 | 1.48 | 1.4 | 1.4 | 1.4 |
| | Vulcanization accelerators | 1.5 | 1.5 | 1.5 | 1.5 | 1.5 | 1.5 | 1.5 | 1.5 | 1.5 |
| Evaluation | Fuel economy | 104 | 103 | 106 | 104 | 103 | 100 | 101 | 102 | 104 |
| | M300 (rubber elongation) | 131 | 129 | 127 | 125 | 127 | 100 | 120 | 117 | 115 |
| | High-temperature fracture energy | 129 | 111 | 114 | 108 | 110 | 100 | 105 | 101 | 100 |
| | Abrasion resistance | 113 | 102 | 105 | 100 | 101 | 100 | 95 | 91 | 90 |
| | Resistance to instant large cuts | 128 | 119 | 122 | 117 | 118 | 100 | 114 | 111 | 110 |

In the examples containing silica, polyethylene glycol, and substantially no silane coupling agent, the elongation of the rubber vulcanizate was improved, and a balanced improvement of fuel economy, mechanical strength at high temperatures, abrasion resistance, and resistance to instant large cuts was achieved.

Moreover, comparisons of Examples 2 and 4 with Comparative Examples 3 and 4, respectively, revealed that when a rubber composition containing silica without any silane coupling agent contains a combination of a modified natural rubber (ultra pure natural rubber (UPNR)) from which non-rubber components have been removed and polyethylene glycol, it provides synergistically improved elongation when vulcanized, fuel economy, mechanical strength at high temperatures, abrasion resistance, and resistance to instant large cuts.

**Claims**

1.   A rubber composition for tires, comprising:

  silica;
  polyethylene glycol; and
  substantially no silane coupling agent.

2.   The rubber composition for tires according to claim 1,
  wherein the rubber composition comprises 2 to 40 parts by mass of the silica per 100 parts by mass of a rubber component in the rubber composition.

3.   The rubber composition for tires according to claim 1 or 2,
  wherein the rubber composition comprises a highly purified modified natural rubber.

4.   The rubber composition for tires according to claim 3,
  wherein the modified natural rubber has a phosphorus content of 500 ppm or lower.

**5.** The rubber composition for tires according to claim 3,
wherein the modified natural rubber has a nitrogen content of 0.30% by mass or lower.

**6.** A pneumatic tire, comprising a tire component comprising the rubber composition according to any one of claims 1 to 5.

**7.** The pneumatic tire according to claim 6,
wherein the tire component is a cap tread.

**8.** The pneumatic tire according to claim 6 or 7, which is a heavy load tire.

# EP 3 533 827 A1

| INTERNATIONAL SEARCH REPORT | International application No. |
| --- | --- |
| | PCT/JP2017/037197 |

**A. CLASSIFICATION OF SUBJECT MATTER**
Int. Cl. C08L21/00(2006.01)i, B60C1/00(2006.01)i, C08C1/04(2006.01)i,
C08K3/36(2006.01)i, C08L7/00(2006.01)i, C08L71/02(2006.01)i

According to International Patent Classification (IPC) or to both national classification and IPC

**B. FIELDS SEARCHED**

Minimum documentation searched (classification system followed by classification symbols)
Int. Cl. C08L7/00-21/02, B60C1/00, C08C1/04, C08K3/36, C08L71/02

Documentation searched other than minimum documentation to the extent that such documents are included in the fields searched
Published examined utility model applications of Japan      1922-1996
Published unexamined utility model applications of Japan    1971-2017
Registered utility model specifications of Japan            1996-2017
Published registered utility model applications of Japan    1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2000-26657 A (SUMITOMO RUBBER INDUSTRIES, LTD.) 25 January 2000, claims, paragraph [0028], embodiments 1-4 (Family: none) | 1-2, 6, 8<br>3-5 |
| X<br>Y | JP 2000-234036 A (SOC DE TECHNOL MICHELIN) 29 August 2000, claims, paragraphs [0002]-[0007], test 6 of embodiment 2 & US 2002/0068781 A1, claims, paragraphs [0002]-[0019], test 6 of embodiment 2 & EP 1028007 A1 | 1-2, 6, 8<br>3-5 |

☒ Further documents are listed in the continuation of Box C.     ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| | |

| Name and mailing address of the ISA/<br>Japan Patent Office<br>3-4-3, Kasumigaseki, Chiyoda-ku,<br>Tokyo 100-8915, Japan | Authorized officer |
| --- | --- |
| | Telephone No. |

Form PCT/ISA/210 (second sheet) (January 2015)

**INTERNATIONAL SEARCH REPORT**

International application No.

PCT/JP2017/037197

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 10-71804 A (SUMITOMO RUBBER INDUSTRIES, LTD.) 17 March 1998, claims, manufacturing example 2 (Family: none) | 1-2, 6<br>3-5 |
| X | JP 2001-261890 A (BAYER AG) 26 September 2001, claims, paragraphs [0026], comparative example 4 & US 2001/0031822 A1, claims, comparative example 4 & EP 1134253 A1 | 1, 6-7 |
| Y | JP 2016-74834 A (SUMITOMO RUBBER INDUSTRIES, LTD.) 12 May 2016, claims, paragraphs [0007], [0027]-[0028], embodiments (Family: none) | 3-5 |
| A | JP 2011-195639 A (SUMITOMO RUBBER INDUSTRIES, LTD.) 06 October 2011, claims, embodiments (Family: none) | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013014999 A
- JP 2010138359 A
- JP 2015124308 A